(19) Europäisches Patentamt

European Patent Office

Office européen des brevets

(11) Veröffentlichungsnummer: **0 486 043 A1**

# (12) EUROPÄISCHE PATENTANMELDUNG

(21) Anmeldenummer: **91119513.9**

(51) Int. Cl.⁵: **B65G 47/244**

(22) Anmeldetag: **15.11.91**

(30) Priorität: **16.11.90 DE 4036627**

(43) Veröffentlichungstag der Anmeldung:
**20.05.92 Patentblatt 92/21**

(84) Benannte Vertragsstaaten:
**AT BE CH DE DK ES FR GB GR IT LI LU NL**

(71) Anmelder: **Max Kettner**
**Verpackungsmaschinenfabrik GmbH & Co. KG**
**Ottobrunner Strasse 1**

**W-8000 München 83(DE)**

(72) Erfinder: **Hauptkorn,Johann**
**Breslauer Strasse 15**
**W-8046 Garching(DE)**

(74) Vertreter: **Marx, Lothar, Dr.**
**Patentanwälte Schwabe, Sandmair, Marx**
**Stuntzstrasse 16**
**W-8000 München 80(DE)**

(54) **Transportgut-Drehvorrichtung.**

(57) Es wird eine Vorrichtung zum Drehen (10) bzw. Ausrichten von Transportgütern (24), wie z.B. Behältern, Kästen, Gebinden oder Paletten mit einer vorzugsweisen Stellfläche von mindestens 100 x 100 mm² vorgeschlagen, die die Transportgüter (24) um etwa 90° um eine etwa vertikale Achse zu drehen vermag; diese Vorrichtung (10) weist mindestens einen in etwa horizontal verlaufenden Förderer (32) für den An- bzw. Abtransport der Transportgüter (24) und eine um eine zur Förderebene in etwa senkrechte Achse drehbare Drehfläche (38) auf, die mit einem Antrieb (43) verbunden ist und mit einem Teil nur der Stellfläche der zu drehenden Transportgüter (24) in Berührung kommt. Dabei wird die mit ihrer innenliegenden Kante zur Mitte der aktiven Breite des Förderers weisende Drehfläche (38) mit einer Umfangsgeschwindigkeit angetrieben, die höher als die Fördergeschwindigkeit des Förderers (32) ist.

Figur 1

Die Erfindung betrifft eine Vorrichtung zum Drehen bzw. Ausrichten von Transportgütern, wie z.B. Behältern, Kästen, Gebinden oder Paletten, wobei die Transportgüter vorzugsweise mindestens 100 x 100 mm² Stellfläche aufweisen, um etwa 90° um eine in etwa vertikale Achse nach dem Oberbegriff des Patentanspruchs 1.

Bei dem Transport von beliebigen Gütern treten immer wieder Situationen auf, in denen unterschiedlich ausgerichtete Güter zur besseren weiteren Handhabung gleichmäßig ausgerichtet und dabei gedreht werden müssen.

Werden z.B. in der Getränkeindustrie Paletten mit Kästen mit Leergut entladen, so haben die Flaschenkästen auf der Palette eine unterschiedliche Ausrichtung. Werden die Flaschenkästen von den Paletten abgeschoben und zur weiteren Behandlung über Horizontalförderer weitergefördert, so sind oft aufeinanderfolgende Flaschenkästen um etwa 90° gegeneinander verdreht.

Da die in der Folge angeordneten Vorrichtungen, z.B. zum Auspacken und Reinigen des Leergutes, darauf angewiesen sind, die einlaufenden Flaschenkästen in einer bestimmten Ausrichtung zu empfangen, müssen die Flaschenkästen in der gewünschten Ausrichtung an die weiterverarbeitenden Vorrichtungen weitergegeben werden.

Ähnliche Probleme können auch beim Transport von anderen rechteckigen Gebinden, Paletten oder auch Behältern auftreten.

Zu diesem Zweck sind bereits verschiedene Drehvorrichtungen bekannt geworden. Bei einer bekannten Drehvorrichtung werden die einlaufenden Transportgüter bzw. Gebinde dadurch gedreht, daß sie am Rand der Transportstrecke gegen einen kufenförmigen Anschlag anlaufen. Durch den unsymmetrischen Widerstand, den ein Transportgut auf diese Art und Weise erfährt, wird das auf einem Horizontalförderer dahinlaufende Transportgut bzw. Gebinde gedreht und letztendlich kontrolliert ausgerichtet. Es ist jedoch leicht nachvollziehbar, daß die Transportgüter bei einer für die gleichmäßige Ausrichtung notwendigen, derartig rauhen Behandlung bei höheren Fördergeschwindigkeiten beschädigt werden können. Es ist deshalb notwendig, die Fördergeschwindigkeit stark zu beschränken, damit die Transportgüter, z.B. Flaschenkästen, Kartons oder Trays nicht beschädigt oder sogar zerstört werden. Diese Einschränkung führt dazu, daß ein typischer Leistungswert für derartige Drehvorrichtungen bei ca. 2500 Gebinden pro Stunde liegt. Außerdem sind die Arbeitsgeräusche einer derartigen Drehvorrichtung vom Standpunkt einer akzeptablen Lärmbelastung des Personals her sehr nachteilig. Schließlich ist anzuführen, daß bei derartigen Drehvorrichtungen relativ große Lücken zwischen den einzelnen Transportgütern erforderlich sind, damit aufeinanderfolgende Transportgüter während des Drehvorganges nicht aufeinander auflaufen und sich gegenseitig blockieren.

Eine weitere Drehvorrichtung, die von der Firma van Uitert, Niederlande, hergestellt wird, ist so ausgestaltet, daß zu drehende bzw. auszurichtende Transportgüter, die auf einem Horizontalförderer transportiert werden, mittels eines in die Gebinde eingreifenden, sich drehenden Schwenk- bzw. Hebelarms ausgerichtet werden. Allerdings ist auch diese in Fachkreisen als "Hubschrauber" bekannte Drehvorrichtung relativ langsam, zudem aufwendig, und nur schwer an unterschiedliche Transportgüter anzupassen.

Andere bekannte Drehvorrichtungen benutzen zu dem die Transportgüter befördernden Horizontalförderer parallel oder diagonal laufende Riemen. Dabei haben die Riemen relativ zur Transportgeschwindigkeit der Horizontalförderer eine Differenzgeschwindigkeit und üben auf diese Weise auf die auszurichtenden bzw. zu drehenden Transportgüter ein Drehmoment aus. Allerdings funktionieren diese Drehvorrichtungen nur relativ ungenau, je nachdem ob die zu transportierenden Gebinde, z.B. feucht, glatt oder dergleichen sind. Außerdem sind relativ lange Strecken notwendig, um über den Ausrichtungsriemen die erforderliche Drehbewegung auf die entsprechenden Transportgüter auszuüben. Auch diese Drehvorrichtung ist einer Leistungsbegrenzung unterworfen, die bei maximal 2600 Transportgütern pro Stunde liegt.

Zum Drehen von Transportgütern wird in der US-A-4 676 361 vorgeschlagen, zwei Förderbänder parallel nebeneinander anzuordnen, die mit unterschiedlichen Geschwindigkeiten angetrieben werden. Die zu drehenden Transportgüter werden über einen Horizontalförderer angefördert und laufen dann auf die Drehstrecke, so daß sie mit ihrer Stellfläche auf beiden Förderbändern zu stehen kommen, infolge der unterschiedlichen Fördergeschwindigkeiten dieser beiden Förderbänder um ihre vertikale Achse gedreht werden und die Drehstrecke über einen zweiten abtransportierenden Förderer wieder verlassen. Am Eingang der Drehstrecke ist eine versenkbare Anschlagplatte angeordnet, die im Bedarfsfall ausgefahren wird, um ein nachfolgendes Transportgut solange zu stoppen, bis das vorausgehende die Drehstrecke verlassen hat. Solch eine Drehstrecke ist insbesondere nicht für den Einsatz in Hochleistungsfördersystemen mit hohen Durchsatzraten an Transportgütern geeignet.

Aus der US-A-4 437 560 ist eine Drehvorrichtung zur Übernahme eines Transportgutes von einem ersten horizontalen Förderer und Abgabe des Transportgutes auf einen zweiten horizontalen Förderer bekannt. Die Drehvorrichtung weist eine zwischen den beiden Förderern und senkrecht zu deren Bahnebene angeordneten Drehachse auf, mit der eine untere, kreisförmige Drehscheibe fest verbunden und an der eine obere, kreisförmige Drehscheibe drehfest, aber axial verschieblich angeordnet sind. Die untere Scheibe schließt plan mit der Bahnebene der beiden Förderer ab, und die obere Scheibe ist entlang der gemeinsamen Drehachse verschiebbar. Die Scheiben werden über ihre gemeinsame Drehachse angetrieben. Ein zu drehendes Transportgut läuft in den Zwischenraum zwischen diesen beiden Scheiben, die obere Scheibe wird auf die untere Scheibe zubewegt, das Transportgut auf diese Weise zwischen den beiden Scheiben eingeklemmt und infolge der Drehbewegung der Scheiben zum zweiten Förderer befördert. Nachdem die obere Scheibe wieder von der unteren Scheibe wegbewegt wurde, ist die Drehvorrichtung zur Aufnahme und Drehung des nächsten Transporgutes bereit. Ein mit dieser Klemm-Drehvorrichtung zu drehendes Transportgut muß zumindest eine stabile Stellfläche und eine weitere, der Stellfläche gegenüberliegende stabile Oberfläche besitzen. Diese Klemm-Drehvorrichtung ist auch nicht für das Drehen unterschiedlicher Transportgüter geeignet, da die Klemmkraft und der Abstand zwischen den beiden Scheiben beispielsweise auf unterschiedlich hohe oder unterschiedlich schwere Transportgüter abgestimmt werden muß. Der konstruktive Aufwand solch einer Klemm-Drehvorrichtung ist sehr hoch, da zumindest ein Antrieb zum Drehen der Drehachse und einer weiteren Antrieb sowie eine Steuereinrichtung für den Klemmvorgang notwendig sind.

Weitere Klemm-Drehvorrichtungen sind aus der DE-A-36 14 202 und der DE-U-19 17 778 bekannt, die im wesentlichen die gleichen Nachteile aufweisen.

Eine weitere Drehvorrichtung, bei der die zu drehenden Transportgüter zum Drehen von einem Förderer gänzlich abgehoben werden müssen, ist aus der DE-A-10 62 163 bekannt. Die Transportgüter werden dabei durch zwei in einem Abstand und parallel zueinander verlaufende Förderbänder transportiert. Seitlich des Förderers ist eine zu dessen Bahnebene senkrecht stehende Drehachse mit sternförmig davon abstehenden Armen angeordnet. Am Ende jedes Arms ist ein senkrecht zur Bahnebene des Förderers bewegliches Hubelement ausgebildet. Die Drehachse ist angetrieben, so daß die an den Armenden angeordneten Hubelemente auf einer Kreisbahn unterhalb des einen Förderbandes hindurchgeführt werden. Haben sie auf ihrer Kreisbahn eine erste Position zwischen den beiden Förderbändern erreicht, so werden sie zum Anheben eines zu drehenden Transportgutes nach oben aus der Bahnebene der beiden Förderbänder herausgefahren und heben das Transportgut an. Das angehobene Transportgut beschreibt auf dem Hubelement liegend in etwa eine Viertelkreisbahn bis zu einer zweiten Position, an der das Hubelement abgesenkt und das Transportgut wieder auf die beiden Förderbänder um etwa 90° gedreht abgestellt wird.

Durch die JP-A-275 324 wird eine Drehvorrichtung offenbart, mit einem einzigen Drehteller, auf dem ein Transportgut zum Drehen abgestellt sein muß. Der Drehteller ist durch einen Stepper-Motor angetrieben.

Eine weitere Vorrichtung mit einer Drehscheibe ist aus der JP-A-6 164 620 bekannt. Danach sind eine Drehscheibe an einer Seite eines Förderers und ihm gegenüber an der anderen Seite ein Hochgeschwindigkeitsförderer angeordnet. Das Drehzentrum dieser Drehscheibe liegt an einer Seitenlinie des Förderers, so daß die Scheibe jeweils mit einer Halbfläche in den Förderer hinein- bzw. zur Seite herausragt. Ferner weist diese Drehvorrichtung in etwa oberhalb der Drehachse der Drehscheibe einen Anschlag für die angeförderten Transportgüter auf. Die zu drehenden Transportgüter laufen einseitig auf die Drehscheibe auf bis zum Anschlag und werden dann um diesen Anschlag infolge der Drehbewegung der angetriebenen Drehscheibe gedreht. Mit zunehmendem Drehwinkel des Transportgutes kommt der seitlich der Drehscheibe angeordnete Teil des Förderers, der mit einer höheren Geschwindigkeit angetrieben wird als die Umfangsgeschwindigkeit der Drehscheibe, zur Wirkung und bringt die Drehung zum Abschluß. Obwohl bei dieser Vorrichtung eine Drehscheibe verwendet wird, bleibt nach wie vor der Anschlag, der den Drehpunkt für das Transportgut bildet, der wesentliche Bestandteil der Drehvorrichtung. Der Drehscheibe kommt lediglich unterstützende Wirkung zum Einleiten der Drehbewegung zu. Grundsätzlich bleiben die Probleme von Systemen mit einem festen Anschlag erhalten.

Um auf Bändern beförderte Hohlsteine bzw. Ziegelformlinge ohne besondere Antriebselemente drehen zu können, wird in der DE-B-10 28 032 vorgeschlagen, eine nicht angetriebene Drehscheibe dicht über einem ersten Förderband anzuordnen. Die Ziegel laufen einseitig auf diese Drehscheibe auf, während sie mit ihrer übrigen Auflagefläche auf weiteren Bändern aufliegend weitertransportiert werden und sich dadurch drehen. Die Drehscheibe ist darüberhinaus in ihrer Höhe und Lage zur Transportebene während des Betriebs einstellbar. Auch diese Drehscheibe übernimmt die Funktion eines Anschlags für die zu drehenden Ziegelformlinge, wirkt jedoch schonender und geräuscharmer als ein unbeweglich angeordneter Anschlag. Die Drehung selbst läuft jedoch unkontrolliert ab. Ein auf die Drehscheibe auftreffender Ziegelformling wird die Drehscheibe in kürzester Zeit auf eine der Fördergeschwindigkeit des antransportierenden Bandes angepaßte Umlaufgeschwindigkeit beschleunigen, so daß der Effekt der langsameren Umfangsgeschwindigkeit der Drehscheibe gegenüber der Fördergeschwindigkeit des Bandes verpufft. Mit der Drehscheibe gemäß dieser Druckschrift ist daher nur eine Drehung eines Ziegelformlings um einen sehr begrenzten Winkelbereich möglich. Da die Drehscheibe nach wie vor als Anschlag wirkt, wird sich vor der Drehscheibe ein Rückstau bilden, falls nicht von vornherein darauf geachtet wird, daß die antransportierten Formlinge einen genügend großen Abstand voneinander haben.

Eine Umlenkvorrichtung zum Umlenken von prismatischen Werkstücken, insbesondere Schachteln, die eine Förder- und/oder Bearbeitungsstrecke durchlaufen, wird durch die DE-A-24 38 181 offenbart. Die Umlenkvorrichtung weist eine zwischen zwei Förderern angeordnete rotierende Umlenkscheibe auf. Die durch den ersten Förderer angelieferten Werkstücke werden auf den Umlenkteller aufgegeben, durch die Drehbewegung des Umlenktellers weiterbewegt und geschwenkt und schließlich an den zweiten Förderer übergeben. Am Ende des ersten Förderers ist für die antransportierten Werkstücke eine Aufgabestelle zum Umlenkteller angeordnet, die eine Stütze zum Abstützen des der Drehachse des Umlenktellers zugewandten Endes der Werkstücke aufweist. Die Geschwindigkeit des Umlenktellers ist in diesem Stützbereich größer als die Geschwindigkeit des die Werkstücke heranführenden Förderers. Die Geschwindigkeitsdifferenz ist so groß, daß das resultierende Drehmoment ausreicht, um eine Schwenkung des Werkstücks zu bewirken. Im Bereich der Aufgabestelle der Werkstücke auf den Umlenkteller ist ferner ein um eine zur Drehachse des Umlenktellers waagerechte Achse rotierendes Beschleunigungsrad angeordnet, das mit seinem Umfang auf die Oberseite der herangeführten Werkstücke drückt und deren der Stütze abgewandtes Ende beschleunigt. Die Umlenkvorrichtung ist jedoch nur zum Schwenken bzw. Drehen von Werkstücken geeignet, die mit ihrer Längsachse quer zur Förderrrichtung antransportiert werden. Das Beschleunigungsrad kommt zudem von oben mit den zu drehenden Werkstücken in Berührung, so daß es nur zum Drehen von Werkstücken mit einer entsprechend ausgebildeten stabilen Oberfläche geeignet ist. Im Prinzip wirkt dieser Umlenkteller wie die bereits diskutierte Drehstrecke mit zwei mit unterschiedlichen Geschwindigkeiten und parallel zueinander angeordneten Förderbändern. Insbesondere im Bereich der Aufgabestelle besteht die Gefahr des Rückstaus der antransportierten Werkstücke. In beliebiger Orientierung antransportierte Werkstücke lassen sich durch diese Umlenkvorrichtung nicht so drehen, daß sie in einer definierten Ausgangslage zum abtransportierenden Förderer gelangen. Schließlich ist der Antrieb für solch einen notwendigerweise sehr großen Umlenkteller, der zudem das volle Gewicht der Werkstücke über einen bestimmten Winkelbereich tragen muß, besonders stark zu dimensionieren.

Es ist die Aufgabe der vorliegenden Erfindung, eine Vorrichtung zum Drehen bzw. Ausrichten von Transportgütern vorzuschlagen, die die Nachteile des Standes der Technik nicht aufweist, und insbesondere eine höhere Arbeitsleistung bei gleichzeitiger schonenderer Behandlung der einzelnen Transportgüter aufweist.

Diese Aufgabe wird durch eine Vorrichtung zum Drehen bzw. Ausrichten von Transportgütern, z.B. Behältern, Kästen, Gebinden, Paletten oder Trays, gelöst, die die Merkmale des Patentanspruchs 1 aufweist.

Vorteilhafte und zweckmäßige Ausgestaltungen der erfindungsgemäßen Vorrichtung werden durch die Merkmale in den Unteransprüchen bestimmt.

Eine erfindungsgemäße Vorrichtung weist gemäß dem Oberbegriff des Patenanspruchs 1 mindestens einen Horizontalförderer für den Antransport nicht gleichmäßig bzw. nicht in gewünschter Weise ausgerichteter Transportgüter und den Abtransport der ausgerichteten Transportgüter sowie eine Drehfläche auf. Die mit einem Antrieb verbundene Drehfläche ist um eine zur Förderebene des Förderers in etwa senkrechte Achse drehbar und kommt mit einem Teil nur der Stellfläche der zu drehenden Transportgüter in Berührung. Erfindungsgemäß wird die Drehfläche mit einer Umfangsgeschwindigkeit angetrieben, die höher als die Fördergeschwindigkeit des Förderers ist. Sie ist ferner zum Förderer so angeordnet, daß sie mit ihrer innenliegenden Kante zur Mitte der aktiven Breite des Förderers weist. Die aktive Breite des Förderers ist die Breite, die tatsächlich zum Fördern der Transportgüter genutzt wird, während der Horizontalförderer insgesamt in der Regel breiter ist als diese aktiv genutzte Breite.

Durch die erfindungsgemäße Ausgestaltung ergibt sich unter anderem der Vorteil, daß Transportgüter, die mit einer bestimmten Geschwindigkeit über den Förderer in den Wirkungsbereich der Drehstation gelangen, durch die von der Fördergeschwindigkeit des Förderers differierende Umlaufgeschwindigkeit des sich drehenden Körpers einen Drehimpuls erhalten, der die zu drehenden bzw. auszurichtenden Transportgüter um einen Winkel von etwa bzw. genau 90° dreht. Dabei sorgt die asymmetrische Anordnung des Körpers bzw. der Kreisfläche zur Mitte des ersten Förderers dafür, daß der Drehimpuls asymmetrisch auf das zu drehende Transportgut übertragen wird.

Wegen der erfindungsgemäßen Anordnung der Drehfläche bleibt mehr als die halbe aktive Breite des Förderers zum Fördern von Transportgütern übrig, die nicht gedreht werden, sondern einfach über die Drehfläche hinweg transportiert werden sollen. Diese Anordnung zielt also bereits auf den Fall ab, daß solch eine Drehfläche eventuell in eine inaktive Stellung gebracht werden soll, um die Möglichkeit zu eröffnen, aus dem Fluß der beförderten Transportgüter diejenigen auszuwählen, die gedreht werden sollen und die anderen unbeeinflußt weiterlaufen zu lassen. Die erfindungsgemäße Geometrie bewirkt somit, daß die zu drehenden Transportgüter einerseits mit einem genügend großen Anteil der Drehfläche in Berührung kommen, damit ein wirksamer Drehimpuls überhaupt übertragbar ist und andererseits, daß im Bereich einer inaktiven Drehfläche noch genügend Förderbreite für die nicht zu drehenden Transportgüter verbleibt.

Ganz wesentlich ist auch, daß die Drehfläche angetrieben ist, da eine nicht angetriebene Drehfläche zwar schonender, aber letztlich doch wie ein fester Anschlag wirken würde, mit der Folge, daß der Durchsatz an beförderten Transportgütern unbefriedigend niedrig bliebe.

Die Drehfläche mit einer Umfangsgeschwindigkeit anzutreiben, die höher als die Fördergeschwindigkeit des Förderers ist, bewirkt den Effekt, daß die erfindungsgemäße Drehvorrichtung nicht mehr eine den Durchsatz begrenzende Komponente für das Fördersystem darstellt. Insbesondere beim Verlassen der gegenüber der Fördergeschwindigkeit des Förderers mit erhöhter Umfangsgeschwindigkeit angetriebenen Drehfläche wird dem zu drehenden Transport ein Drehimpuls mitgeteilt, der eine Art Schleudereffekt bewirkt, da die hohe Umfangsgeschwindigkeit in diesem Bereich der Drehfläche eine Komponente nach außen, von der Mitte des Förderers weg, aufweist.

Grundsätzlich wäre es jedoch auch denkbar, den drehenden Körper bzw. die Drehfläche mit einer negativen Differenz-Umfangsgeschwindigkeit anzutreiben. Mit solch einer Drehfläche wäre zwar gegenüber einem festen Anschlag oder einer nicht angetriebenen Drehfläche noch immer eine Erhöhung der Durchsatzrate zu erzielen, eine Staubildung bahnaufwärts von solch einer Drehvorrichtung wäre jedoch nicht gänzlich auszuschließen, insbesondere dann nicht, wenn die Transportgüter in sehr geringen Abständen antransportiert werden.

Die erfindungsgemäße Vorrichtung ist demzufolge in der Lage, die auszurichtenden Transportgüter sehr schonend zu drehen, wobei außerdem kein besonders hoher Lärmpegel entsteht. Daraus ergeben sich außergewöhnlich hohe Leistungsdaten von ca. 6000 ausgerichteten Transportgütern pro Stunde, oder sogar mehr.

Bevorzugterweise ist die Drehfläche in Bezug auf die ankommenden Transportgüter derart angeordnet, daß die Stellfläche des betreffenden Transportgutes wenigstens zeitweise in Kontakt mit etwa einem Viertel der Gesamtbreite des sich drehenden Körpers bzw. der Drehfläche tritt. Hierdurch ist gewährleistet, daß die Übertragung des Drehimpulses besonders effektiv und kontrolliert vonstatten geht. Die Transportgüter, die in der Regel mindestens eine Stellfläche von $100 \times 100 \text{ mm}^2$ aufweisen, lassen sich auf diese Weise zufriedenstellend drehen bzw. ausrichten, ohne daß die wirksame Fläche des drehenden Körpers bzw. der Drehfläche unnötig beansprucht wird.

Gemäß einer weiteren bevorzugten Ausführungsform kann auch ein nahezu punktförmiger Kontakt zwischen der Drehfläche und dem zu drehenden Transportgut erfolgen, insbesondere, wenn die Drehfläche plan und gegenüber der Förderebene geneigt ist.

Zweckmäßigerweise ist die wirksame Fläche des drehenden Körpers, die Drehfläche, als Friktionsfläche ausgebildet. Hierzu können z.B. Profile in der wirksamen Fläche des drehenden Körpers dienen, oder es kann ein Material mit einem entsprechend hohen Reibwert oder beispielsweise eine Kombination beider Maßnahmen gewählt werden.

Ist die Fläche des drehenden Körpers plan und zur Mitte des ersten Förderers hin geneigt, so können die auszurichtenden Transportgüter besonders leicht auf die wirksame Fläche des drehenden Körpers auflaufen, um von der erfindungsgemäßen Drehstation mit einem ausrichtenden Drehimpuls beaufschlagt zu werden. Dabei können am äußeren Umfang der Drehfläche des drehenden Körpers der erfindungsgemäßen Drehvorrichtung, im folgenden auch Drehteller genannt, noch weitere umfänglich verlaufende Profile vorgesehen sein, die das Auflaufen der auszurichtenden Transportgüter zusätzlich erleichtern. Ist die Neigung des Drehtellers einstellbar, so läßt sich die erfindungsgemäße Drehvorrichtung auf einfache Weise, nämlich durch Veränderung des Neigungswinkels des Drehtellers, auf unterschiedlichste Transportgüter einstellen, und zwar nicht nur in bezug auf deren Abmessungen, sondern auch in bezug auf deren Gewicht usw.. Die oben genannten Vorteile für einen geneigten Drehteller lassen sich auch erzielen, wenn der Drehteller eine geradlinig abgeschrägte Oberfläche oder eine Oberfläche mit einem bestimmten Krümmungsradius aufweist. Dabei kann der Drehteller zusätzlich höhenverstellbar sein. Der Krümmungsradius kann derart angelegt sein, daß der Drehteller konkav oder konvex ist. Auch ein kegel- oder pilzförmiger Drehteller ist mit positivem Ergebnis getestet worden.

Die Drehfläche ragt zum Drehen von Transportgütern vorteilhafterweise aus der Förderebene des Förderers zumindest teilweise heraus. Das zu drehende Transportgut wird dadurch vorteilhafterweise leicht schräg angestellt und läßt sich daher besonders einfach drehen.

Bei der vorteilhaften Ausführungsform der Drehfläche als plane Fläche, die zum Drehen von Transportgütern geneigt ist und aus der Förderebene ein Stück herausragt, erfolgt der Kontakt zwischen Drehfläche und zu drehendem Transportgut nahezu punkthaft. Das Transportgut liegt bei der Drehung somit in etwa punktweise auf der Drehfläche und linienweise auf dem Förderer auf. In diesem Fall genügen bereits geringe Drehimpulse zum Drehen.

Damit der Drehteller über seinen zugeordneten Antrieb nicht mit einer übermäßig hohen Umfangsgeschwindigkeit betrieben werden muß, um an die auszurichtenden Transportgüter die erforderlichen Drehimpulse weiterzugeben, hat die Fläche bzw. die Friktionsfläche des Drehtellers eine hohe Reibungszahl, die wenigstens 0,1, vorzugsweise aber größer als ungefähr 0,2 sein sollte, Da sich die auszurichtenden Gegenstände in Bewegung befinden, ist hier die Gleitreibungszahl gemeint. Allerdings können bei geringen Transportgeschwindigkeiten an die Stelle der Gleitreibungszahl auch die entsprechenden Werte für die Haftreibungszahl treten.

Besonders gute Ergebnisse lassen sich erbringen, wenn die wirksame Fläche bzw. Friktionsfläche des Drehtellers eine Beschichtung aus einem oder mehreren aufvulkanisierten Elastomeren und/oder einem oder mehreren Kunststoffen aufweist. Versuche haben ergeben, daß besonders gute Ergebnisse mit aufvulkanisierten Gummiflächen erzielbar sind, wobei das Gummimaterial vorzugsweise eine Shore-Härte von mindestens ca. 85 aufweist.

Um Transportgüter, die nicht ausgerichtet werden sollen, unbeeinflußt an der erfindungsgemäßen Drehvorrichtung vorbeizulassen, ist es vorteilhaft, die erfindungsgemäße Drehvorrichtung derart auszugestalten, daß diese zumindest mit dem wesentlichen Wirkungsbereich des Drehtellers aus einer aktiven Stellung aus der Förderebene des Förderers in eine inaktive Stellung auskoppelbar ist. Selbstverständlich muß die erfindungsgemäße Vorrichtung genauso gut wieder einkoppelbar sein. Für die Kontrolle, wann die erfindungsgemäße Drehvorrichtung ein- bzw. ausgekoppelt werden soll, können verschiedene Sensoren vorgesehen sein. Zum Beispiel kann über eine Videokamera mit einem lichtempfindlichen Array erkannt werden, welches Transportgut auszurichten ist oder nicht. Über eine Steuerung kann hier in kürzester Zeit reagiert werden, und der Drehteller wird je nach Bedarf mit seinem Wirkungsbereich in den Förderer eingekoppelt oder aus diesem ausgekoppelt. Auf diese Weise lassen sich auch in schneller Folge aufeinanderfolgende, auszurichtende bzw. bereits ausgerichtete Transportgüter entsprechend ausrichten bzw. unbehelligt passieren. Als Sensor kommt auch eine Lichtschranke in Frage, die die Länge des Transportgutes, in Laufrichtung gesehen, erfaßt.

Der Drehteller kann entweder leicht angehoben bzw. leicht abgesenkt werden, oder aber in seinem Neigungswinkel derart verändert werden, daß zumindest seine wesentliche, wirksame Oberfläche zur Übertragung des Drehimpulses nicht mehr an die vorbeibeförderten Transportgüter heranreicht, um die Ausrichtung vorzunehmen bzw. zu unterlassen.

Um den Drehteller der erfindungsgemäßen Drehvorrichtung an die Geschwindigkeit des Förderers anzupassen oder anzugleichen bzw. den Drehteller passiv mitlaufen zu lassen, kann der Antrieb der erfindungsgemäßen Vorrichtung z.B. über eine Magnetkupplung abgekoppelt werden. Prinzipiell ist es auf diese Art und Weise auch möglich, entweder einen Impuls bzw. ein Moment auf auszurichtende Transportgüter auszuüben, oder aber in der richtigen Ausrichtung befindliche Transportgüter lediglich passiv weiterzufördern, ohne daß ein Drehimpuls übertragen wird. Dabei wird die Magnetkupplung wahlweise ein- oder ausgekuppelt, so daß der Drehteller entweder angetrieben ist, oder aber passiv mitläuft. Darüberhinaus ist die Drehgeschwindigkeit der Drehfläche einstellbar.

Zweckmäßigeweise werden als Förderer Rollenförderer, Stauförderketten, Scharnier- oder Plattenbandketten verwendet. Dabei kommt es darauf an, welche Güter zumeist auf der betreffenden Vorrichtung transportiert bzw. gedreht werden. So lassen sich Stauförderketten z.B. besonders gut für den Transport sperriger Güter und Verpackungen einsetzen. Plattenbandketten lassen sich für besonders anspruchsvolle Verwendungen, bei denen gleichzeitig hohe Belastungen auftreten und hohe Fördergeschwindigkeiten gewünscht sind, verwenden. Scharnierbandketten sind zweckmäßig, wenn u.a. eine flexible Kurvengängigkeit der Bandführung gewünscht wird.

Als besonders vorteilhaft hat es sich erwiesen, wenn als Förderer Stauförderketten verwendet werden, die auf Scharnierbandketten befestigt sind. Durch diese Anordnung lassen sich besonders problematische Transportgüter, wie z.B. Kartons oder Trays besonders gut an die unterschiedlichen Geschwindigkeitsverhältnisse auf der erfindungsgemäßen Vorrichtung angleichen.

Die unterschiedlichen Fördergeschwindigkeiten auf und auch vor der erfindungsgemäßen Vorrichtung lassen sich wie folgt beschreiben: Ein vor dem Förderer angeordneter weiterer Förderer sollte mit einer geringeren Fördergeschwindigkeit arbeiten als der erstgenannte Förderer. Im Transportbereich, außermittig angeordnet, sollte der Drehteller der erfindungsgemäßen Vorrichtung mit einer Geschwindigkeit angetrieben sein, die von der Fördergeschwindigkeit des Förderers in diesem Bereich derart abweicht, daß sich mit dem damit auf auszurichtende Transportgüter zu übertragenden Drehimpuls die entsprechenden Güter ausrichten lassen.

Die Fördergeschwindigkeit eines nachfolgenden Förderers, der die ausgerichteten Transportgüter weiterfördert, sollte zumindest nicht kleiner sein als die Fördergeschwindigkeit des Förderers im Drehbereich, damit es nicht zu Stausituationen kommt. Daraus ergibt sich gleichzeitig, daß die Geschwindigkeit der vor dem Förderer im Drehbereich angeordneten Fördereinrichtung geringer sein muß als die Fördergeschwindigkeit des nachfolgenden Förderers.

Im folgenden werden unter Bezugnahme auf die beigefügten Figuren bevorzugte Ausführungsformen der erfindungsgemäßen Vorrichtung eingehend erläutert. Dabei werden weitere Vorteile und Merkmale der Vorrichtung nach der vorliegenden Erfindung offenbart, die neu und wesentlich sind. Es zeigen:

Fig. 1      eine schematisierte Draufsicht auf eine erfindungsgemäße Vorrichtung;

Fig. 2a      einen Drehteller im Querschnitt;

Fig. 2b      den Drehteller gemäß Fig. 2a in einer Draufsicht;

Fig. 3a      einen Vertikalschnitt durch eine erfindungsgemäße Vorrichtung in Höhe des Drehtellers;

Fig. 3b      eine Vorrichtung gemäß Fig. 3a in einer Draufsicht;

Fig. 4a      eine weitere Ausführungsform einer erfindungsgemäßen Vorrichtung in einem Vertikalschnitt in Höhe eines geneigten Drehtellers;

Fig. 4b      die Ausführungsform gemäß Fig. 4a in einem Längsschnitt;

Fig. 4c      die Ausführungsform gemäß den Fig. 4a und 4b in einer Draufsicht;

Fig. 5a      eine weitere Ausführungsform in einem schematisierten Vertikalschnitt in Höhe des geneigten Drehtellers;

Fig. 5b      die Ausführungsform gemäß Fig. 5a in einem Längsschnitt; und

Fig. 5c      die Ausführungsform gemäß den Fig. 5a und 5b in einer Draufsicht.

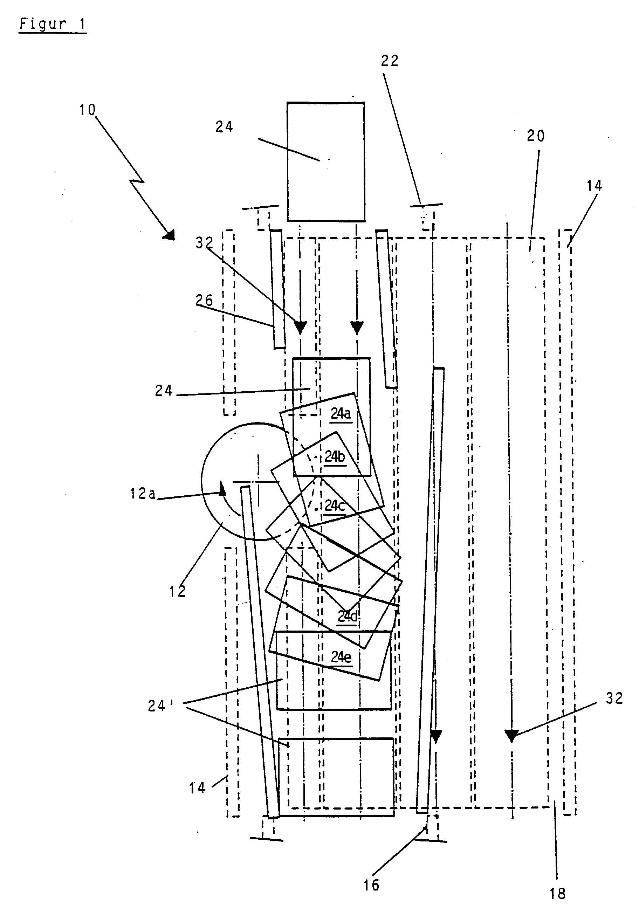

In Fig. 1 ist die erfindungsgemäße Vorrichtung allgemein durch das Bezugzeichen 10 gekennzeichnet. Ein Horizontalförderer 18, 20, der auch unter einer leichten Neigung zur Horizontalen verlaufen kann, in Form eines auf einem Scharnierbandtisch 18 geführten Scharnierbandes 20 ist an einer Seite mit einem Drehteller 12 der erfindungsgemäßen Vorrichtung versehen. Vorgeschaltete und nachgeschaltete Fördervorrichtungen 22, 16 sorgen für die Anlieferung bzw. für den Abtransport der Transportgüter 24, 24'.

Die Drehrichtung des Drehtellers 12 ist schematisch durch den Pfeil 12a angedeutet. Der verwendete Horizontalförderer 18, 20 läßt sich auch in mehrere unterschiedliche Horizontalförderer aufgliedern. Dieses ist jedoch in der Regel nicht notwendig.

Seitenwangen 14 grenzen die erfindungsgemäße Vorrichtung nach außen ab. Mehrere verstellbare Geländer 26 sind zur Anpassung der erfindungsgemäßen Vorrichtung an spezifische Transportgüter eingerichtet. So lassen sich sowohl relativ kleine Transportgüter 24 als auch relativ große Transportgüter 24 kontrolliert drehen und damit ausrichten. Zu diesem Zweck ist es auch vorteilhaft, wenn sich der Drehteller 12 normal zur Transportrichtung des Scharnierbandes 20, dargestellt durch die Pfeile 32, verstellen läßt. Daraus ergibt sich, daß der Radius bzw. der Durchmesser des Drehtellers 12 in einem bestimmten Verhältnis zu der maximalen aktiven Gesamtbreite des Scharnierbandes 20 stehen muß, damit auch relativ große Transportgüter, deren Abmessungen im Bereich des eben noch auf dem Scharnierband 20 Transportierbaren bzw. Drehbaren liegen, ohne Einschränkungen ausgerichtet werden können.

Die verschiedenen Situationen, die ein Transportgut 24 während des Ausrichtevorganges durchläuft, sind gleichfalls in Fig. 1 dargestellt. Das einlaufende Transportgut 24 läuft zunächst auf den Drehteller 12 der erfindungsgemäßen Vorrichtung auf und wird von diesem mitgenommen und dadurch aus seiner ursprünglichen Bahn ausgelenkt. Dabei durchläuft das Transportgut der Reihe nach die Positionen 24a bis e, bis es schließlich als um 90° gedrehtes Transportgut 24' am anderen Ende des Scharnierbandes 20 ankommt. Dabei wird die Drehbewegung des Transportgutes 24 durch die gegenüber dem Scharnierband 20 erhöhte Umlaufgeschwindigkeit des Drehtellers 12 bewirkt. Gleichzeitig wird dabei die Richtungsänderung der Umfangsgeschwindigkeit bzw. Tangentialgeschwindigkeit des Drehtellers 12 gegenüber dem Horizontalförderer ausgenutzt.

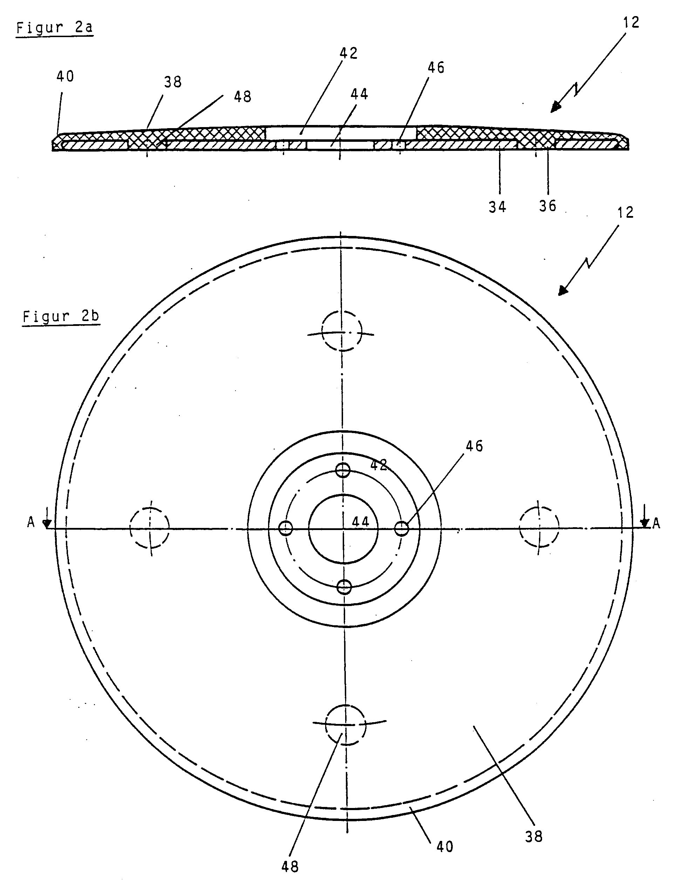

In den Fig. 2a und 2b, die nachfolgend gemeinsam erörtert werden, ist eine bevorzugte Ausführungsform eines Drehtellers 12 dargestellt. Fig. 2a stellt einen Schnitt durch den Drehteller gemäß Fig. 2b entlang der Schnittlinie A-A dar.

Der Drehteller 12 weist eine auf ein Grundteil 34 aufvulkanisierte Gummischicht 36 auf. Die Gummischicht hat vorzugsweise eine Shore-Härte von etwa 85.

Allerdings ist es auch möglich, das Grundteil 34 des Drehtellers 12 lediglich mit einem Profil zu versehen, das in der Lage ist, auf ein Transportgut 24 einen entsprechenden Drehimpuls zu übertragen. Dabei ist es lediglich erforderlich, daß die Fläche bzw. die Friktionsfläche 38 des Drehtellers 12 eine hohe Reibungszahl aufweist. Diese ist vorzugsweise größer als ungefähr 0,2, beträgt aber wenigstens 0,1. Bei den angegebenen Zahlenwerten kann es sich je nach der Ausrichtungsgeschwindigkeit, die angewendet wird, sowohl um die Haftreibungszahl als auch um die Gleitreibungszahl oder eine Interpolation dazwischen handeln.

Wie der Fig. 2a zu entnehmen ist, weist die Fläche bzw. Friktionsfläche 38 des Drehtellers 12 eine Krümmung auf. Am Außenumfang des Drehtellers 12 ist eine Abschrägung 40 vorgesehen, die das Auflaufen der auszurichtenden Transportgüter 24 zusätzlich erleichtern kann. Die Ausnehmungen 42, 44 dienen zur Montage des Drehtellers auf einer Drehachse, über die der Drehteller 12 mit einem Antrieb verbunden ist. Die Bohrungen 46 sind als Durchführungen für Befestigungsmittel gedacht und können entweder glatt oder mit einem Gewinde versehen sein. Die Ausnehmungen 48 werden beim Aufvulkanisieren mit dem Gummimaterial ausgefüllt. Statt des Gummimaterials der aufvulkanisierten Schicht 36 kann auch eine Schicht aus einem oder mehreren aufvulkanisierten Elastomeren und/oder aus einem oder mehreren Kunststoffen vorgesehen sein.

Die aus Fig. 2b ersichtlichen Positionen ergeben sich aus der Beschreibung zu Fig. 2a.

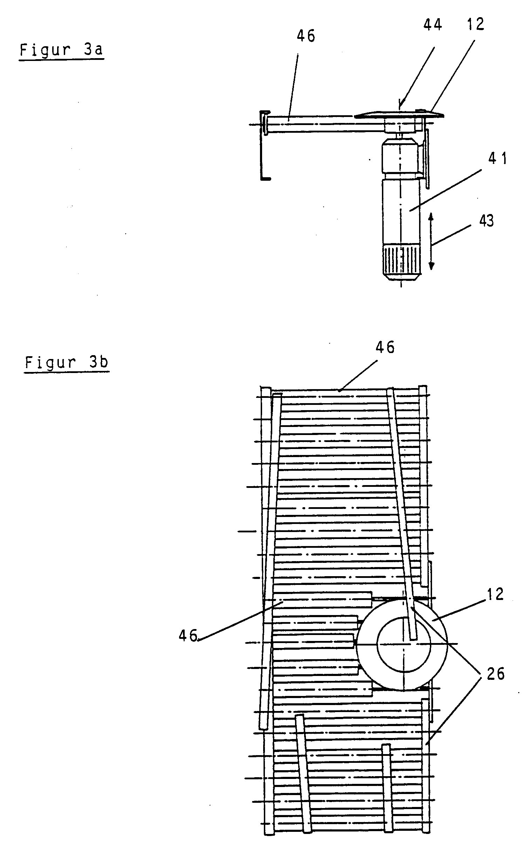

Aus den Fig. 3a und 3b ist eine weitere Ausführungsform der erfindungsgemäßen Vorrichtung ersichtlich. In Fig. 3a ist ein Drehteller 12 dargestellt, der eine Pilzform aufweist. Auf der Symmetrieachse 44 des Drehtellers ist ein Antrieb 41, hier ein Elektromotor 41, angeordnet. Durch den Zweirichtungs-Pfeil 43 ist angedeutet, daß der Drehteller 12 abgesenkt und angehoben werden kann. Die Vertikalschnittdarstellung zeigt gleichfalls eine Transportrolle 46, die mit einer anderen Geschwindigkeit als die Umfangsgeschwindigkeit des Drehtellers 12 angetrieben wird.

Die Draufsicht gemäß Fig. 3b läßt ebenfalls den Drehteller 12 gemäß Fig. 3a erkennen. Leitbleche 26 sind so angeordnet, daß die Zuführung von zu drehenden bzw. auszurichtenden Transportgütern unterstützt wird. Die Leitbleche 26 sind verstellbar, so daß sie an die Zuführung von Transportgütern unterschiedlicher Abmessungen angepaßt werden können.

Außerhalb des Bereiches des Drehtellers 12 verlaufen die Transportrollen 46 über nahezu die gesamte Breite des Horizontalförderers. Im Bereich des Drehtellers 12 sind die Rollen 46 entsprechend dem Durchmesser des Drehtellers 1 gekürzt. Es versteht sich von selbst, daß die Rollen 46 im wesentlichen angetriebene Transportrollen sind.

Werden der erfindungsgemäßen Vorrichtung gemäß den Fig. 3a, 3b abwechselnd ausgerichtete und auszurichtende Transportgüter 24 zugeführt, so kann eine etwa kurz vor dem Drehteller 12 angeordnete Videokamera, die z.B mit einem lichtempfindlichen Halbleiter-Array ausgestattet ist, signalisieren, welche Ausrichtung die betreffenden Transportgüter aufweisen. Die entsprechenden Signale können an eine Steuervorrichtung weitergegeben werden, die sodann veranlaßt, daß der Drehteller 12 entweder über die Transportebene der Transportrollen 46 in die Arbeitslage angehoben oder unter diese in die Ruhelage abgesenkt wird.

Es ist natürlich auch möglich, dies manuell vorzunehmen oder aber eine vorbestimmte Reihenfolge der ausgerichteten bzw. unausgerichteten Transportgüter zu Steuerzwecken auszunutzen.

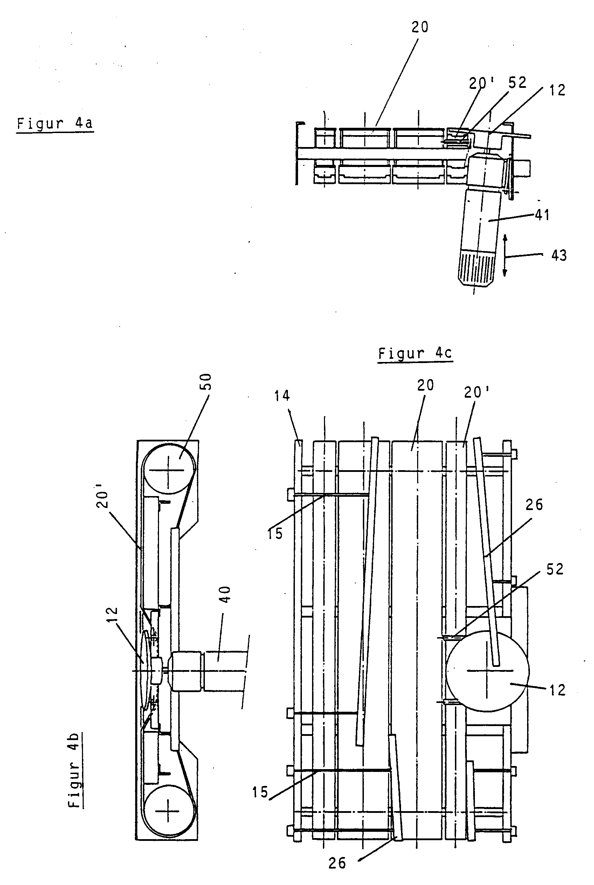

In den Fig. 4a, 4b und 4c ist eine Ausführungsform einer erfindungsgemäßen Vorrichtung dargestellt, bei der der Drehteller 12 geneigt ist. Im Ausführungsbeispiel ist der Drehteller 12 zur Mitte des Förderers 20 hin nach oben geneigt. Dabei sollte die Neigung des Drehtellers 12 einstellbar sein. Die gesamte Drehtellerkonstruktion ist wiederum in der Höhe verfahrbar, was durch den vertikalen Zweirichtungs-Pfeil 43 dargestellt sein soll. Die Drehfläche 12 befindet sich in der Darstellung gemäß Fig. 4a in ihrer aktiven Stellung, in der sie ein kleines Stück aus der Förderebene herausragt. Um sie in eine inaktive Stellung zu bringen, um Transportgüter einfach passieren zu lassen, kann sie entweder entlang des Pfeils 43 nach unten gefahren oder, falls die Platzverhältnisse dies erlauben, entsprechend gekippt werden. Der stufenlos regelbare Elektromotor 41, der auf der Achse 44 des Drehtellers 12 angeordnet ist, sorgt für die nötige Umlaufgeschwindigkeit des Drehtellers 12. Die in den Figuren 4a, 4b und 4c dargestellte Vorrichtung weist als horizontales Fördermittel Scharnierbänder 20 auf. Das Scharnierband 20', das auch im Bereich des Drehtellers 12 verläuft, wird im Bereich des Drehtellers 12 unter diesem hindurchgeführt. Die Umlenkung geschieht dabei über zusätzliche Umlenkrollen 52.

Die Führung des Scharnierbandes 20' ist insbesondere aus der Fig. 4b ersichtlich. Das Scharnierband 20', wie auch das Scharnierband 20, wird durch die Umlenk- bzw. Antriebsrollen 50 endlos geführt. Das Scharnierband 20' wird im Bereich des Drehtellers 12 unter diesem hindurchgeführt.

In der Fig. 4c ist die Ausführungsform nach den Fig. 4a und 4b nochmals in einer Draufsicht dargestellt. Dabei sei auf die Umlenkrollen 52 hingewiesen, die das Scharnierband 20' im Bereich des Drehtellers 12 das Scharnierband 20' unter dem Drehteller 12 hindurchführen sollen. Die Geländer bzw. Leitbleche 26, die die Zuführung der auszurichtenden und die Weiterförderung der ausgerichteten Transportgüter 24 unterstützen sollen, lassen sich über Stelleinrichtungen 15, die am Gestell 14 des Scharnierbandtisches abgestützt sind, einstellen.

Sollen auf den Scharnierbandketten 20 vorwiegend besonders sperrige Güter, wie z.B. Kartons, transportiert werden, so sollten auf den Scharnierbändern Staufförderketten angeordnet sein, um den besonderen Anforderungen dieser Transportgüter 24 Rechnung zu tragen.

Selbstverständlich kann auch bei der geneigten Ausführungsform für den Drehteller 12 eine Beschichtung aus einem oder mehreren aufvulkanisierten Elastomeren, wie auch aus einem oder mehreren Kunststoffen in Frage kommen.

Um den Drehteller 12 in eine passive Stellung zu veretzen, kann eine Kupplungseinrichtung vorgesehen sein, z.B. eine Magnetkupplung, so daß der Drehteller 12 auch dann keine ausrichtende bzw. drehende Funktion innehat, wenn er nicht unter das Förderniveau der Scharnierbandketten 20, 20' abgesenkt ist.

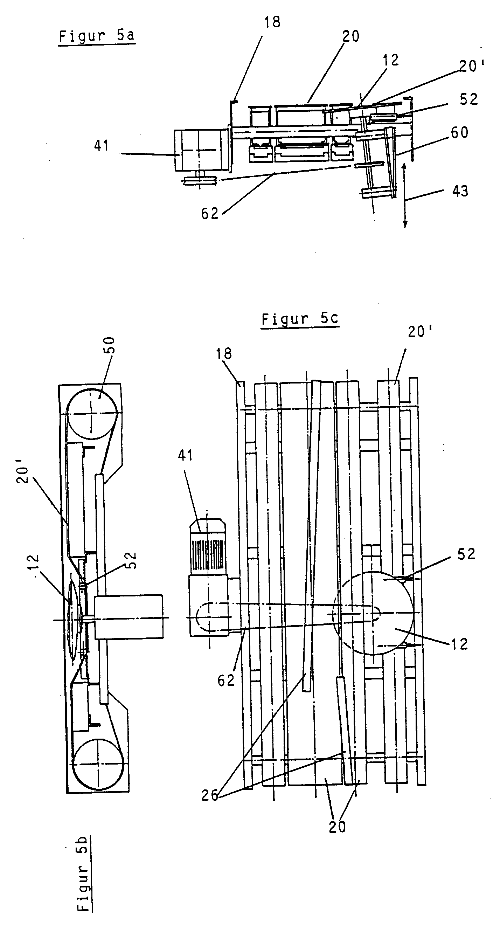

Aus den Fig. 5a bis 5c ist eine weitere Ausführungsform ersichtlich, bei der ein in seinem Neigungswinkel einstellbarer Drehteller 12 vorgesehen ist. In diesem Ausführungsbeispiel ist der Drehteller 12 zur Mitte des Förderers 20 hin nach unten geneigt. Auch dieser Drehteller 12 läßt sich, wie der Zweirichtungs-Pfeil 43 andeutet (Fig. 5a), vollständig unter die Förderebene der Scharnierbandkette 20, 20' versenken bzw. über diese teilweise hinausschieben.

Über einen Mechanismus 60 läßt sich der Neigungswinkel des Drehtellers 12 einstellen. Dabei ist es möglich, über Stellschrauben den Neigungswinkel des Tellers 12 zu variieren. Zu einem Teil befindet sich der Drehteller 12 in seiner aktiven Stellung, in der er einen Drehimpuls auf auszurichtende Transportgüter 24 ausübt und teilweise unter den Scharnierbandketten 20. Lediglich die Scharnierbandkette 20' wird im Wirkungsbereich des Drehtellers 12 über Umlenkrollen 52 unter diesem hindurchgeführt. Der Antriebsmotor 41 für den Drehteller 12 ist bei dieser Ausführungsform nicht auf der Achse des Drehtellers 12 angeordnet sondern seitlich am Scharnierbandtisch 18. Für die Antriebsübertragung ist in diesem Fall eine Kette bzw. ein Riemen 62 erforderlich.

Aus der Darstellung gemäß Fig. 5b ergibt sich nochmals die Umlenkführung für das Scharnierband 20' über die Umlenkrollen 52 im Bereich des wirksamen Teils des Drehtellers 12.

Aus Fig. 5c ist abermals die spezielle Anordnung des Antriebsmotors 41 in Verbindung mit dem Übertragungs-Riemen bzw. der Übertragungs-Kette 62 zu ersehen. Wiederum sind Geländer bzw. Führungsbleche 26 vorgesehen, um den Transport und nebenher auch die Ausrichtung der Transportgüter 24 zu unterstützen.

Falls erforderlich, kann der Drehteller 12 (gilt für alle Ausführungsformen) normal zur Förderrichtung des Horizontalföderers 18, 20 nach innen hin verschoben werden, falls dies die spezialle Größe eines auszurichtenden Transportgutes 24 erfordern sollte.

Bei sämtlichen Ausführungsformen können für die Erreichung des Horizontalförderers sowohl aktive als auch zum Teil passive Rollen, Staufförderketten, Scharnier- oder Plattenbandketten in Frage kommen. Auch eine Kombination von auf Scharnierbandketten befestigten Staufförderketten kommt für besonders sperrige Transportgüer, wie z.B. Kartons oder Trays, in Frage.

Bei den Ausführungsformen nach den Figuren 1, 3 und 4 ragt der aktive Teil des Drehtellers 12 in die Bahn des Horizontalförderers hinein, während der inaktive Teil über den Rand des Horizontalförderers hinaus vorsteht und dadurch zusätzlich Platz beansprucht. Dies wird bei der Ausführungsform nach Fig. 5 vermieden, bei der sich die inaktive Hälfte des Drehtellers 12 unter dem Horizontalförderer befindet, nämlich gemäß der Darstellung in Fig. 5c der linke Teil des Drehtellers 12, während der rechte Teil über die Förderebene hinausragt und damit in Kontakt mit der Stellfläche der Transportgüer kommen kann. Der Drehteller 12 steht also nicht über den rechten Rand des Horizontalföderers hinaus vor, so daß insgesamt weniger Platz benötigt wird.

Bei den bevorzugten Ausführungsform werden die Transportgüter durch den Drehteller 12 beschleunigt, so daß eine Folge von Transportgütern auseinandergezogen wird und damit auch Transportgüer mit relativ geringen Abständen voneinander ausgerichtet werden können. Es ist prinzipiell jedoch auch möglich, die Transportgüer entgegen der Förderrichtung zu drehen; dies bedingt allerdings relativ große Abstände zwischen den aufeinanderfolgenden Transportgütern.

Gemäß einer bevorzugten Ausführungsform wird eine Drehscheibe, also eine kreisförmige Drehfläche, verwendet. Prinzipiell können auch Drehflächen mit polygonaler Form eingesetzt werden, insbesondere mit Rechteck- oder Quadratform. Dies bedingt jedoch ein Synchronisieren bzw. Takten mit den ankommenden Transportgütern,wodurch ein zusätzlicher Aufwand entsteht.

**Patentansprüche**

1.  Vorrichtung zum Drehen bzw. Ausrichten von Transportgütern, wie zum Beispiel Behältern, Kästen, Gebinden, Trays oder Paletten, die vorzugsweise mindestens 100 x 100 mm$^2$ Stellfläche aufweisen, um etwa 90° um eine etwa vertikale Achse,

a) mit mindestens einem in etwa horizontal verlaufenden Förderer (18, 20; 46) für den An- bzw. Abtransport der Transportgüter (24), und

b) mit einer um eine zur Förderebene in etwa senkrechten Achse (44) drehbaren, mit einem Antrieb (41) verbundenen Drehfläche (12), die mit einem Teil nur der Stellfläche der zu drehenden Transportgüter (24) in Berührung kommt,

**dadurch gekennzeichnet,** daß

c) die Drehfläche (12) mit einer Umfangsgeschwindigkeit angetrieben wird, die höher als die Fördergeschwindigkeit des Förderers (18, 20; 46) ist; und

d) die innenliegende Kante der Drehfläche (12) zur Mitte der aktiven Breite des Förderers (18, 20;46) weist.

2. Vorrichtung nach Anspruch 1, dadurch gekennzeichnet, daß die Drehfläche (12) in Bezug auf die ankommenden Transportgüter (24) derart angeordnet ist, daß die Stellflächen der Transportgüter (24) wenigstens zeitweise in Kontakt mit etwa einem Viertel der Gesamtbreite der Drehfläche (12) treten.

3. Vorrichtung nach einem der Ansprüche 1 oder 2, dadurch gekennzeichnet, daß die Drehfläche (12) als Friktionsfläche (38) mit einer Reibungszahl von mindestens etwa 0,1, insbesondere von mindestens etwa 0,2 ausgebildet ist.

4. Vorrichtung nach einem der Ansprüche 1 bis 3, dadurch gekennzeichnet, daß die Drehfläche (12) zum Drehen von Transportgütern zumindest teilweise aus der Förderebene des Förderers (18, 20; 46) herausragt.

5. Vorrichtung nach einem der Ansprüche 1 bis 4, dadurch gekennzeichnet, daß die Drehfläche (12) plan und zum Drehen von Transportgütern gegenüber der Förderebene des Förderers (18, 20; 46), inbesondere zur Mitte der Förderebene hin nach oben, geneigt ist.

6. Vorrichtung nach einem der Ansprüche 1 bis 5, dadurch gekennzeichnet, daß die Drehfläche (12) eine Krümmung, insbesondere eine Pilzform; aufweist oder kegelförmig ausgebildet ist.

7. Vorrichtung nach einem der Ansprüche 1 bis 6, dadurch gekennzeichnet, daß die Drehfläche (12) höhenverstellbar ist.

8. Vorrichtung nach einem der Ansprüche 1 bis 7, dadurch gekennzeichnet, daß die Drehfläche (12) eine Beschichtung aus einem oder mehreren Kunststoffen aufweist.

9. Vorrichtung nach einem der Ansprüche 1 bis 8, dadurch gekennzeichnet, daß die Drehfläche (12) zumindest mit ihrem wesentlichen Wirkungsbereich aus einer aktiven Stellung aus der Förderebene des Horizontalförderers (18, 20; 46) heraus in eine inaktive Stellung auskoppelbar, insbesondere verschiebbar oder neigbar; ist.

10. Vorrichtung nach Anspruch 9, dadurch gekennzeichnet, daß das Verschieben oder Neigen der Drehfläche (12) über eine Steuereinrichtung, z.B. eine speicherprogrammierbare Steuerung (SPS) in Verbindung mit einer Videokamera mit einem lichtempfindlichen Array oder einer Lichtschranke vorgenommen wird.

11. Vorrichtung nach einem der Ansprüche 5 bis 10, dadurch gekennzeichnet, daß die Neigung der Drehfläche (12) einstellbar ist.

12. Vorrichtung nach einem der Ansprüche 1 bis 12, dadurch gekennzeichnet, daß die Umfangsgeschwindigkeit der Drehfläche (38) der Fördergeschwindigkeit des Förderers (18, 20; 46) anpaßbar ist, indem ihr Antrieb, z.B. durch eine Magnetkupplung, abgekoppelt wird.

13. Vorrichtung nach einem der Ansprüche 1 bis 12, dadurch gekennzeichnet, daß als Förderer (18, 20) Rollenförderer, Stauförderketten, Scharnier- oder Plattenbandketten, insbesondere auf Scharnierbandketten befestigte Stauförderketten, verwendet werden.

14. Vorrichtung nach einem der Ansprüche 1 bis 13, dadurch gekennzeichnet, daß sich die Lage der Drehfläche (12) normal zur Förderrichtung des Förderers (18, 20) verändern läßt.

15. Vorrichtung nach einem der Ansprüche 1 bis 14, dadurch gekennzeichnet, daß die Drehfläche durch die Oberseite einer Kreisscheibe (12) gebildet wird.

16. Vorrichtung nach einem der Ansprüche 1 bis 16, dadurch gekennzeichnet, daß die Drehfläche eine polygonale Form, insbesondere eine Rechteck- oder Quadratform hat, und daß die Drehbewegung mit der Fördergeschwindigkeit synchronisiert bzw. getaktet ist.

17. Vorrichtung nach einem der Ansprüche 1 bis 16, dadurch gekennzeichnet, daß in der Zuführung zur Drehfläche (12) Leitbleche (26) angeordnet sind, die in Anpassung an die Abmaße der zu drehenden Transportgüter einstellbar sind.

Figur 1

Figur 2a

Figur 2b

Figur 3a

Figur 3b

Figur 4a

Figur 4c

Figur 4b

Figur 5a

Figur 5b

Figur 5c

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-B-1 028 032 (HANS LINGL)<br>* das ganze Dokument *<br>--- | 1-4,7 | B65G47/244 |
| A | US-A-4 669 602 (OUELLETTE J. F.)<br>* Zusammenfassung; Abbildungen *<br>--- | 1,4,9 | |
| A | FR-A-2 226 339 (GEMMANI)<br>* das ganze Dokument *<br>--- | 1,3,6,8 | |
| A | DE-B-1 283 151 (ENZINGER-UNION-WERKE AKT.)<br>* Ansprüche 1-8; Abbildungen *<br>--- | 1,17 | |
| A | FR-A-2 637 877 (ETABLISSEMENTS CAZAS)<br>* Zusammenfassung; Abbildungen *<br>----- | 1 | |

| | RECHERCHIERTE SACHGEBIETE (Int. Cl.5) |
|---|---|
| | B65G<br>B65B |

Der vorliegende Recherchenbericht wurde für alle Patentansprüche erstellt

| Recherchenort | Abschlußdatum der Recherche | Prüfer |
|---|---|---|
| DEN HAAG | 17 FEBRUAR 1992 | VAN ROLLEGHEM F. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument

........................................................................

& : Mitglied der gleichen Patentfamilie, übereinstimmendes
  Dokument

EPO FORM 1503 03.82 (P0403)